# EUROPEAN PATENT APPLICATION

(11) **EP 2 862 623 A1**
(43) Date of publication of application: **22.04.2015**
(21) Application number: 12878720.7
(22) Date of filing: 23.10.2012
(51) Int. Cl.: B01F 15/04, G05D 11/02

(54) **DEVICE FOR AUTOMATIC METERING AND SUPPLY OF DILUTE LIQUIDS, PROCESS FOR PRODUCTION WITHIN SAME AND CONTROL-CIRCUIT MICROPROCESSING**

(30) Priority: 13.06.2012 BR 102012014252
(71) Applicant: Profilática Produtos Odonto Médico Hospitalares Ltda., 80630-010 Curitiba - PR (BR)
(72) Inventor: HILÁRIO GOMES Fausto Fernando, 80630-010 Curitiba/ PR (BR); POLINARI DE ARAÚJO, Renato, 80630-010 Curitiba/ PR (BR)
(74) Representative: Pfenning, Meinig & Partner GbR
(86) International application number: PCT/BR2012/000413
(87) International publication number: WO 2013/185190

(57) **Abstract**

The present invention relates to equipment for diluting concentrated liquid products in a continuous manner and at various concentrations and in various amounts. Said equipment furthermore involves a hydraulic dilution process and a PCI circuit control system that controls the equipment and calculates the metered amounts, on the basis of information from temperature sensors, information on conductivity and flow, and information from a chemical sensor. Dilution takes place in a mixer and, after mixing, a product is obtained ready for use in a receptacle. The equipment has a printer that allows printing-out of the data on the dilution completed.

## Description

The present invention aims to provide equipment for diluting concentrated liquid products continuously and in variable quantities and concentrations, in which a mixer and conductivity sensor guarantee precise dilution of the solution. The present invention also refers to the process and to the control system of this equipment. This technology is related to the field of devices for decontaminating/disinfecting environments associated with health settings, such as hospitals and other environments that need to be thoroughly cleaned.

### BACKGROUND ART

The health services environment is noted as a significant repository for micro-organisms, in particular those that are multi-resistant, in addition to the organic material present that favours the proliferation of pathogens.

Thus the correct use of materials and techniques for disinfecting and cleansing plays an important role in health services, to break the epidemiological chain of infection.

Consequently chemicals have been found for this purpose, ready to use and in varying concentrations according to the application for which the product is intended, depending on the manufacturer or current regulations. These products are sold in concentrations appropriate for their use, eliminating the need for dilution.

When there is a need for intensive product use for cleansing and disinfection, as is the case in health services environments, it is necessary to reduce costs such as transport and packaging, and avoid generating large quantities of plastic waste that cannot be recycled due to their chemical content. Thus, these products are sold as concentrates, to be diluted in the proportion specified by the manufacturer. However, when the product is diluted in proportions differing from those specifications, there is, for example, product wastage if the concentration is stronger or, conversely, if the dilution is weaker than the specification, the product becomes inefficient, thus causing the proliferation of pathogens. This being the case, in the state of the art, there is equipment for diluting these cleaning and disinfection products utilising the negative pressure technique (Venturi), and in systems that use dilution by timed release of the diluent.

The application WO201133484 describes a piece of equipment that has a diluent receptacle, a valve to control its flow, and an aspirator. This aspirator allows the inflow of the diluent by way of negative pressure - the Venturi effect - and a metering pump that is activated by a control device. Similarly, the application US20110032790 describes a mixer that works using the Venturi effect. The art described in these documents is the technique of diluting the solution using negative pressure (Venturi). The Venturi metering system has a serious problem, in that when the water inlet pressure is lower than the recommended value, there is a loss of pressure in the suction of the chemical which can lead to incorrect metering. In some cases, the water returns to the chemical container, modifying the product's original concentration. Neither does this system controls whether there is chemical present on the outflow, and the pump generally suffers wear-and-tear, altering the concentration of the mixtures.

The application MU8701552 describes a metering device that uses gravitational force to mix the liquids that are released by an electro-valve. The mixture is carried out in a compartment with a motor and a distributor coil to homogenise the solution. It is a weight-controlled gravimetric dosage system, in which two tanks filled with the compounds to be mixed are positioned above a dilution tank which receives the two products, one at a time. The final volume of the mixture is limited and dependent upon the upper tanks; this system requires an operator to refill the tanks with the chemical, giving rise to a risk of contact with the chemical or excessive weight for filling. Also, as the system works by weight, there exists the possibility of failure depending on where it is installed, due to the variation in pressure and altitude that may influence the final weight of the diluted product. Another problem is that the pressure can vary due to the quantity of liquid in the receptacle, i.e., the greater the quantity is, the greater the pressure and the release of liquid will be, thus producing variations in the metered dose.

Application document US 6237807 describes a metering system with timed dilution, i.e. a sensor controls the pre-programmed time of release, according to the needs of the operator. Besides being a system for low doses with extremely limited production, by metering cycle, the apparatus is innacurate, in the sense that it allows for incorrect metering, as it does not control the concentration of the compound to be diluted. Pump wear-and-tear can also occur, which impairs the equipment's accuracy.

The apparatus that is the object of this patent overcomes these problems in the state of the art by containing a device that measures the concentration of the product, guaranteeing exact and reliable dilutions as well as preventing the generation of incorrect doses and because it is flexible in that it allows different dosages and quantities. Another advantage is that the equipment automatically detects if the chemical is present, thus avoiding the dilution of the wrong product, or dilution outside the set standard, and it even allows the information on dilution and operation to be transmitted to a remote database via the internet. Moreover, the equipment produces continually and regardless of any wear on the pump as it is automatically regulated to maintain the metered dose.

### Aims of the invention

The system used in the apparatus that is the subject of this patent aims to dose and confirm the concentration of the metered product, that is continually produced, with reliability and accuracy, guaranteeing the product for immediate use. The apparatus draws in the concentrate by means of a pump, and injects it into an homogenising system with a conductivity sensor, until the programmed conductivity within the system is reached. In this way the apparatus opens the water inlet valve and begins producing the diluted ready-to-use product. The apparatus constantly measures the conductivity and adjusts the speed of the pumped chemical to maintain the programmed value. The system also allows for dose programming by the user.

One of the advantages of the invention is the continuous supply of metered, ready-to-use product, guaranteed by the conductivity which is constantly measured and regulated by a pump. The apparatus continuously produces small or large volumes and maintains the accuracy of the metered dose, avoiding any erroneous dose, in which the operator has water in the receptacle but has no chemical, due to the lack of devices that measure whether or not the product was correctly diluted.

Another advantage is its function of preventing product wastage , which operates by means of a system that shuts off the machine automatically when the receptacle to be filled reaches its limit.

In addition to these advantages the apparatus can be activated with a wired or wireless button or pedal, so that the operator has his hands free.

Other optional components of the machine are the possibility of reporting metered values in parts per million on a screen, and a printer that automatically prints a label with the expiry date, measured metered dose and lot number, and all the other information that the operator may consider necessary.

The present invention solves the problem of having to dilute the product manually; as well as problems of innacurate dilution problems which occur in other metered systems. It also avoids contact with concentrated chemicals that could be harmful to the operator.

The machine could reliably replace the concept of ready-to-use products which entails a huge environmental cost. This is because ready-to-use products use many gallons of containers, which are necessary for storage and transport, thus generating a large quantity of plastic waste that damages the environment, and these containers cannot be recycled sincethey have been used for transporting chemicals.

The equipment in the present patent uses only a one container of super-concentrate and produces hundreds of gallons of diluted, ready-to-use product, according to the customer's needs, thus considerably reducing the cost of transport, CO₂ emissions from freight lorries, and storage and stock for customers, and allowing containers to be reused, as they can be refilled with ready-to-use diluted product.

To optimise and provide greater control over the diluted product, the present invention anticipates the means to transmit via internet the data generated by the equipment to a remote database, thus facilitating the administration, logistics and stocks of the product in the building where the equipment is set up.

### DESCRIPTION OF FIGURES

Figure 1 shows a diagram of the hydraulic process of the equipment connected to the electronics.
Figure 2 shows a flow diagram of the system programmed in the equipment

### DETAILED DESCRIPTION OF THE INVENTION

The object of the invention is to provide an equipment comprising a PCI (Peripheral Component Interconnector) card connected to a set of sensors in an hydraulic flow, controlled by a system in order to avoid errors in the dilution of the final product. This PCI aims to interpret all the signals from the sensors and, based on the programme stored in its memory, to determine which procedures should be carried out in its peripherals (valves, pumps, printer etc.). This card also registers all the data for possible compilation of future data and also works with a conference system by means of a titration sensor. For the dilution to be more precise, the equipment delivers the metered dose by conductivity, and the PCI card, according to the variation in conductivity, computes the compensatory values in order to determine the metered dose. The PCI card is also connected to the following peripherals: input device; printer (optional), screen (optional); and a network interface (optional).

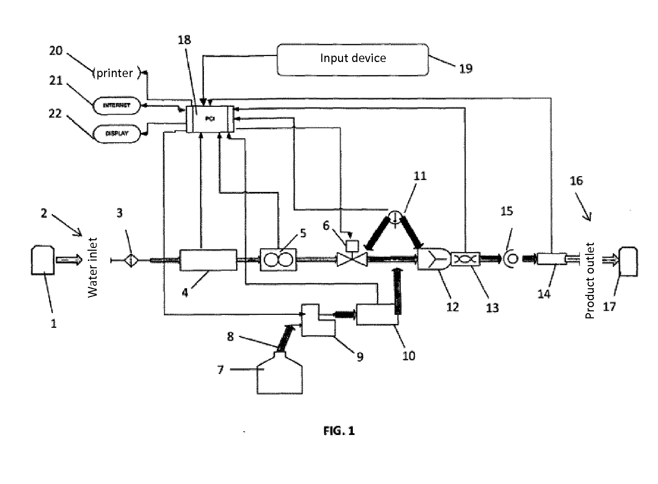

In an example presenting the operation of the equipment, according to Figure 1, the hydraulic flow is initiated by the water inflow 2, connected to a water source, 1, which can be an hydraulic network or a reservoir, where the water flows through a filter 3, to prevent blockages, and passes through a water sensor 4, which measures its conductivity.

Then a flow sensor 5 controls the quantity of water passing and a solenoid valve 6 controls and limits the water flow for dilution. It also automatically prevents the release of water, upon detecting, by means of the sensors, the absence of any chemical.

A chemical inlet 8 allows the chemical to be pumped from the chemical source 7 by means of a peristaltic pump 9. The peristaltic pump fulfils important purposes: it draws in the chemical introduced into the dilution system with accuracy, by means of peristalsis, guaranteeing that the dilution process is reliable and that all the product from the chemical source 7 is drawn in, without air being introduced into the system, regardless of the position of the mentioned source. A chemical sensor 10 detects and identifies the chemical present and a temperature sensor 11 measures the water's temperature.

The PCI 18 computes the dosage of the solution based on the data collected by the water sensor 4, water flow sensor 5, temperature sensor 11, chemical sensor, 10 so that the proportions of chemical and water are correct; the chemical and the water proceed to the mixer 12, which consists of a chamber where the fluids are mixed/homogenised. In the mixer 12, there is a distributor that performs the mixing, thereby guaranteeing the homogenisation of the solution and that there is no backflow of water into the chemical manifold.

After dilution in the mixer 12 a titration sensor 13 measures the concentration of the dilution and the PCI 18 calculations verify the accurate dilution of the solution which proceeds to the product outlet 16, passing through a cut-off sensor 14 that completes the process when the receptacle is filled with the diluted product 17. A one-way valve 15 retains the fluid in the manifold, avoiding splashing and the preventing the operator from coming into contact with the chemical product.

The PCI card 18 controls the sensors and other peripherals described as follows:
- a screen 22 (optional), that can be touch-sensitive, which displays the available programmes or those chosen by the operator, which allows him to identify the chemical being used and in what metered dose, the filling date and other relevant dosage data, which drastically reduces the margin for error, as all the information concerning the process is displayed on the screen;
- a wired or wireless (for example, Wi-Fi, GPRS) network interface 21 (optional), which sends data to the company database which can be accessed by the client or any interested party and which checks the quantity of product produced (per day, month, year), if consumption is high or low in each sector, provides data for the managers of the institutions where the equipment is installed or for the manufacturer, so that they can monitor whether there are any equipment failures or if the product is being used and diluted correctly, among other information;
- a preferably thermal printer 20 (optional), that prints onto a thermo-sensitive adhesive roll of paper. The data for printing are emitted by the PCI 18 and collected by the sensors, without interference from the operator. The print-out will show: the product being used, the selected dosage, the day and hour of the process and the expiry date of the product in question. This print-out can be detached and fixed to the receptacle filled during the process, thus guaranteeing total reliability and the impossibility of any risk through human error. The print-out is performed automatically at the end of every filling process, and the operator still has the option of reprinting the data from the last filling, in the event of any problem that might have occured;
- an input device 19 for the programming and selection of dosage options. The input device can be a keyboard, a touch-sensitive screen or an input device on a pedal or on a hose nozzle, enabling the operator to begin production in one way and end it in another, for example.

The set of sensors comprises:
- a water sensor 4 that analyses the water quality for greater precision in the metered chemical, due to the variation in water quality in the different locations where the equipment is installed, which detects how high the water conductivity is and sends this information to the PCI 18 that performs the compensatory calculations for the dosage;
- flow sensor 5, that constantly measures the water flow passing to the solution, telling the PCI to regulate the chemical dosage, and which, as it is highly accurate, can report the quantity of product produced daily;
- temperature sensor 11, that constantly sends to the PCI 18 the water temperature so that it can compute the compensatory calculations for the metered dose using mathematical algorithms, so there is no chance of error in the dosage due to climatic variations.
- chemical sensor 10 which detects the presence of and identifies the metered chemical, relaying this to the PCI 18, which automatically determines the expiry of the produced product. This sensor also operates as a security system, preventing the production of an end product which has no chemical.
- titration sensor 13, which makes a measurement after the product has been diluted, guaranteeing that the solution has the correct concentration, this sensor can be of three types depending on the chemical to be used: a conductivity sensor; a diluted oxygen sensor and an infrared sensor;
- cut-off sensor 14, that confirms the filling of the receptacle with the diluted product 17 and sends a signal to the PCI to shut off the equipment, thus avoiding overspill, and allowing the operator to carry out other tasks while filling is taking place.

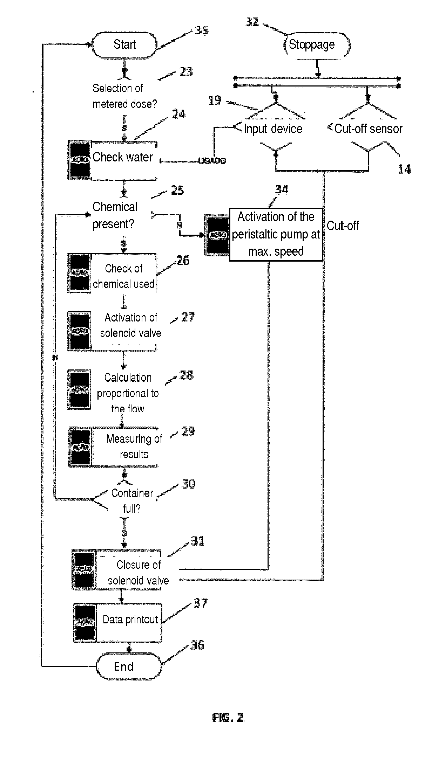

To control the PCI 18 and its inter-relationships with the set of sensors, valves and other peripherals, an equipment control system was developed, which carries out the following functions, as shown in figure 2.

The system starts 35 with the operator selecting a metered dose 23, or using a dose pre-defined by the system, by activating the input device 19. Then the system checks the water 24, by means of the water sensor 4, the flow sensor 5 and the temperature sensor 11, and then it checks whether there is any chemical product 25. If there is no chemical the peristaltic pump is activated at maximum speed 34, and the solenoid valve 31 is closed, to prevent the flow of water. If there is a chemical, the system checks the chemical used 26, with the chemical sensor 10, activates the solenoid valve 27, and calculates the chemical proportional to the yield 28. Then the system measures the result 29, with a titration sensor 13, until the receptacle is filled and automatically closed, by the cut-off sensor 14. Until the receptacle is filled the system continuously returns to stage 25 and subsequent stages, provided there is no interruption 32 to the process by the actions of the operator at any time, using the input device 19. After one of these interruption procedures 32, the closure of the solenoid valve is activated 31. Optionally at the end of the process, the user can print out the data 37.

## Claims

1. **HIGH-PRECISION AUTOMATIC METERING DEVICE FOR DILUTION OF LIQUIDS** comprising a water inlet (2), with a filter (3), connected to a solenoid valve (6) which, in turn, is connected to a mixer (12) for diluting, such that before this valve is a water sensor (4), and a flow sensor (5), and after this valve is a temperature sensor (11), whereas on the other side there is a chemical inlet (8) in which the chemical is drawn in by a peristaltic pump (9) from a chemical source (7); this chemical passes through a chemical sensor (10) before arriving at a mixer (12) where it is mixed with the water. This mixer (12) is also connected to the product outlet (16), before this outlet there is a titration sensor (13), a cut-off sensor (14) and a one-way valve (15), these sensors and peripherals are all controlled by a PCI card (18) that interprets the data from the equipment sensors by means of the system programmed in its memory to determine the actions of the peripherals, said system being activated by an input device (19).

2. **HIGH-PRECISION AUTOMATIC METERING DEVICE FOR DILUTING LIQUIDS** according to Claim 1, comprising the input device (19) which can be a keyboard, a touch-sensitive screen or an activating device located on a pedal, or on the nozzle of a hose.

3. **HIGH-PRECISION AUTOMATIC METERING DEVICE FOR DILUTING LIQUIDS,** according to Claim 1, comprising the titration sensor (13) which can be a conductivity sensor, or a diluted oxygen sensor, or an infrared sensor.

4. **HIGH-PRECISION AUTOMATIC METERING DEVICE FOR DILUTING LIQUIDS,** according to Claim 1, comprising, optionally, a printer (20), preferably a thermal printer, connected to the PCI (18).

5. **HIGH-PRECISION AUTOMATIC METERING DEVICE FOR DILUTING LIQUIDS,** according to Claim 1, comprising, optionally, a network interface (21) connected to the PCI (18) to allow the wired or wireless transmission of data.

6. **HIGH-PRECISION AUTOMATIC METERING DEVICE FOR DILUTING LIQUIDS** according to Claim 1, comprising, optionally, a screen (22) connected to the PCI (18) for presenting the data.

7. Process for automatic metering device according to all the previous claims, comprising the following stages:
- the passage of water through the water inlet (2), connected to a water source (1), the flow of which is controlled by a solenoid valve (6);
- the passage of water through a filter (3);
- the passage of a chemical through the chemical inlet (8), connected to a chemical source (7), drawn in by a peristaltic pump (9);
- calculation of the metered dose of the solution by the PCI (18), based on information collected by the water sensor (4), the water flow sensor (5), the temperature sensor (11), the chemical sensor (10), so that the proportion of chemical to water is correct;
- mixing and homogenisation of the chemical with the water in the mixer (12);
- checking the result of the dilution by means of the titration sensor (13), according to the metered dose previously calculated;
- the passage of the diluted substance through the product outlet (16), to fill the receptacle with diluted product (17);
- interruption of filling of the receptacle with diluted product (17) by means of a cut-off sensor (14) and closure of the one-way valve (15).

8. System for carrying out the process according to Claim 7, comprising the following stages:
a) selecting the metered dose (23);
b) checking the water (24) by means of the water sensor (4), the flow sensor (5) and the temperature sensor (11);
c) checking the presence of chemical (25) and checking the chemical used (26), by means of the chemical sensor (10);
d) activation of the solenoid valve (27);
e) calculation of the value proportional to the flow (28) based on the data collected in stages b and c;
f) checking measurementthe result (29) of the dilution by means of the titration sensor (13);
g) checking the filling of the receptacle (30) by the cut-off sensor (14);
h) closure of the solenoid valve (31);
i) stoppage (32);

9. System according to Claim 8 in which stage a) of selection of metered dose by the operator, optionally, allows for multiple metered dose configurations and quantities, or in which there are doses pre-defined by the system, which are activated using an input device (19);

10. System according to Claim 8, comprising, at stage c), if the chemical sensor detects that there is no chemical (25), the activation of the peristaltic pump at maximum speed (34) and closure of the solenoid valve (31).

11. System according to Claim 8, in which stage e) is performed based on the water temperature data collected by the water sensor (4), the flow sensor (5), the temperature sensor (11), and the chemical sensor (10).

12. System according to Claim 8, in which, at stage g), if the cut-off sensor (14) detects that the receptacle is not filled, the process returns to stage c).

13. System, according to Claim 8, in which, at stage g) the filling of the receptacle can be optionally interrupted at any time by the operator by means of the input device (19) bringing the process to stages h) and i)

14. System according to Claim 8 in which, in stage i) the optional stoppage (32) is activated by the cut-off sensor (14).

15. System according to Claim 8, which allows, at the end of the process, the printing of data (37) concerning the performed dilution.
